# EUROPEAN PATENT SPECIFICATION

(11) **EP 3 536 567 B1**
(45) Date of publication and mention of the grant of the patent: **08.12.2021**
(21) Application number: 18160732.6
(22) Date of filing: 08.03.2018
(51) Int. Cl.: B60T 7/02, F16L 5/02, F16L 5/12, F16L 5/14, F16L 39/00, G05G 1/30

(54) **PEDAL UNIT**
PEDALEINHEIT
UNITÉ DE PÉDALE

(43) Date of publication of application: 11.09.2019
(73) Proprietor: ZF CV Systems Europe BV, 1170 Brussels (BE)
(72) Inventor: Jedrzejczyk, Paulina, 54-152 Wroclaw (PL)
(74) Representative: Copi, Joachim

(56) References cited:
- WO-A1-2015/076721
- DE-A1- 2 220 429
- DE-A1- 19 506 630
- GB-A- 2 125 919
- US-B1- 6 447 023

## Description

The invention relates to a pedal unit for use in a vehicle, in particular for use in a truck, comprising: a main body having a plurality of passages, each passage allowing for fluid communication between an inlet port on a first side of said main body and an outlet port on a second side of said main body, and a first coupling being detachably mounted to said main body.

Such pedal units may comprise a braking, clutch and/or throttle pedal allowing the driver to brake and/or accelerate the vehicle and/or to engage or disengage the vehicle's clutch.

Pedal units are usually mounted to the firewall of a vehicle. The firewall separates a driver's cabin from the engine compartment. Since a plurality of fluid lines run from the driver's cabin through the firewall into the engine compartment, the main body of a pedal unit often comprises a plurality of passages in order to allow for fluid communication between the driver's cabin and the engine compartment. An example of a connector plate configured to connect fluid lines across a firewall is disclosed in US6447023 B1.

Each passage has an inlet port on a first side of the pedal unit's main body facing the driver's cabin and an outlet port on a second side of the main body facing the engine compartment. Known pedal units use separate coupling devices in order to connect a single fluid line to an inlet port or an outlet port of the main body.

This leads to the fact that a plurality of coupling devices have to be mounted to the main body in order to establish multiple fluid communication lines through the main body.

If a plurality of coupling devices has to be mounted to the main body in order to establish a connection between the fluid lines and the pedal unit, the installation requires a plurality of working steps, which result in a time-consuming installation process. Furthermore, the complex installation leads to an increased risk of installation errors and therefore to an increased risk of component failure.

The usage of separate coupling devices for each inlet port or outlet port also leads to a time-consuming quality control. The connection between a fluid line and an inlet port or an outlet port of the pedal unit's main body has to be checked for tightness. Hence, a pedal unit having a plurality of coupling devices mounted to its inlet ports or outlet ports has to take a plurality of leakage tests.
Pedal units are subject to continuous development that leads to a continuous modification of its design. Hence, another disadvantage of known pedal units is that a modification of design, for instance of the pedal unit's main body, especially a modification of the inlet ports or outlet ports, may require a modification of the plurality of coupling devices. This leads to higher costs and has a negative impact on the development of such pedal units.

WO 2015/076721 A1, a PCT publication, generally discloses a connection block for connecting together a plurality of pipelines in a vehicle.

The object of the present invention is therefore to provide a pedal unit which allows for a less time-consuming and complex installation process and/or reduce the costs resulting from a design modification of the pedal unit's main body.

Thus, according to the invention, a pedal unit of the initially mentioned type is proposed, wherein the first coupling has a plurality of internal passageways, each internal passageway is in fluid communication with a respective inlet port or outlet port of the main body and adapted to receive a fluid line.

The invention makes use of the fact that the mounting process of a plurality of identical couplings is considerably simplified and accelerated by combining identical couplings to one single coupling assembly in order to establish fluid connection between a plurality of fluid lines and respective inlet ports or outlet ports of a pedal unit's main body.

In a first preferred embodiment of the pedal unit according to the invention a gasket establishes a sealed connection between the internal passageways of the coupling and the inlet ports or outlet ports of the main body. The gasket is disposed between a first side of the coupling facing the main body and a surface of the main body surrounding its inlet ports or outlet ports. The gasket may be of any suitable design and material being able to avoid leakage between the main body's inlet ports or outlet ports and the coupling. The gasket is preferentially made from expanded graphite, PTFE, rubber, fibre or mica and may comprise reinforcements. Also semi-metallic gaskets may be used according to the invention.

A second preferred embodiment of the pedal unit according to the invention comprises a plurality of gaskets, wherein each gasket establishes a sealed connection between an internal passageway of the coupling and a respective inlet port or outlet port of the main body. The gaskets may be formed as an O-ring made of synthetic rubber or a suitable thermoplastic. Preferably, the synthetic rubber is selected from a list consisting of: butadiene rubber (BR), butyl rubber (IIR), chlorosulfonated polyethylene (CSM), epichiorohydrin rubber(ECH, ECO), ethylene propylene diene monomer (EPDM), ethylene propylene rubber (EPR), fluoroelastomer (FKM), nitrile rubber (NBR, HNBR, HSN): perfluoroelastomer (FFKM), polyacrylate rubber(ACM), polychloroprene (neoprene) (CR), polyisoprene (IR), polysulfide rubber (PSR), polytetrafluoroethylene (PTFE), sanifluor, silicone rubber (SiR) or styrene butadiene rubber (SBR). A suitable thermoplastic according to the invention may be one of the following: thermoplastic elastomer (TPE), thermoplastic polyolefin (TPO), thermoplastic polyurethane (TPU), thermoplastic etheresterelastomers (TEEEs), thermoplastic polyamide (PEBA), melt processible rubber (MPR) or thermoplastic vulcanizate (TPV).

In another preferred embodiment of the pedal unit according to the invention each gasket is adapted to withstand operating pressures up to 15 bar without allowing for leakage. Such high pressure withstanding gaskets may preferably be obtained by using reinforced materials.

According to another preferred embodiment of the pedal unit according to the invention the coupling of the pedal unit has a, preferably planar, surface with a plurality of grooves, wherein each groove is adapted to receive at least one of the gaskets. Preferably, the grooves are circularly-shaped in order to receive an O-ring to seal an inlet port or an outlet port against the coupling.

In another preferred embodiment of the pedal unit according to the invention the main body has a recess around its inlet ports and/or around its outlet ports. Each recess is adapted to receive the coupling and form a, preferably planar, surface interacting with the gaskets. The outer shape of the recess is adapted to the shape of the coupling. Preferably, the adapted shape of the recess allows for inserting the coupling just in one position. This eliminates the risk of an incorrect alignment of the coupling relative to the main body.

In another preferred embodiment of the pedal unit according to the invention sections of the coupling extend into corresponding passages of the main body. The correspondence of such sections with passages of the main body further simplifies the installation and mounting process of the coupling and further reduces the risk of wrong alignment. Furthermore, the overlapping sections can be used to increase the support of the coupling through an interaction, preferably through contact with the passages of the main body.

In another preferred embodiment of the pedal unit according to the invention a clamping ring is disposed within each internal passageway of the coupling. Preferably, the clamping ring is disposed in a section extending into a corresponding passage of the main body. The clamping ring applies a clamping force onto the coupling. Preferably, the clamping force is at least partially oriented in a radial outward direction and presses the coupling against main body.

In another preferred embodiment, each internal passageway is adapted to receive at least one O-ring. This O-ring is adapted to seal a fluid line against a respective passageway of the coupling.

In another preferred embodiment, each internal passageway is adapted to receive at least one bushing. The bushing may comprise another O-ring in order to seal a fluid line against a respective passageway of the coupling. Through a combination of bushing and O-ring no additional fixation of the fluid line is necessary in order to establish a proper connection between fluid line and coupling. Since no additional fixation is necessary the installation of the fluid lines is considerably simplified and accelerated.

According to another preferred embodiment of the pedal unit according to the invention the coupling is formed as an elongate plate and adapted to receive mounting means on both ends of the elongate plate. Preferably the internal passageways are disposed along a line and are equidistantly spaced from each other.

Preferably, the coupling has at least two through-holes for screwing the coupling to the main body, wherein the through-holes are arranged in an asymmetric manner. Through the asymmetric arrangement of the through-holes the coupling can only be mounted to the main body in one specific alignment. Therefore, the risk of mounting errors is eliminated.

In another preferred embodiment of the pedal unit according to the invention the main body comprises at least four, preferably at least six passages and the coupling comprises at least four, preferably at least six internal passageways. By means of such a pedal unit a respective number of fluidly independent fluid communication lines can run from the driver's cabin through the pedal unit into the engine compartment of the vehicle.

In another preferred embodiment of the pedal unit according to the invention each internal passageway of the first coupling is in fluid communication with a respective inlet port and a second coupling is detachably mounted to the main body. The second coupling has a plurality of internal passageways, each internal passageway of the second coupling is in fluid communication with a respective outlet port of the main body and adapted to receive a fluid line. Preferably, the second coupling is identically formed and mounted to the main body as the first coupling. Further preferably, the second coupling is formed and/or mounted according to one of the above described embodiments.

Below, the invention is described in greater detail with reference to preferred embodiments and to the drawings in the figures. The drawings show in:
Fig. 1 a front view of an embodiment of the pedal unit according to the invention;
Fig. 2 a perspective view of a coupling according to the invention with connected fluid lines;
Fig.3 a perspective view of a coupling according to the invention without fluid lines;
Fig. 4 a cross-sectional view of the main body of a pedal unit according to the invention;
Fig. 5 a cross-sectional view of a coupling being mounted to a main body of a pedal unit according to the invention;
Fig. 6 a perspective view of a coupling according to the invention;
Fig.7 a top view of a coupling according to the invention; and
Fig. 8 a cross-sectional side view of a coupling according to the invention.

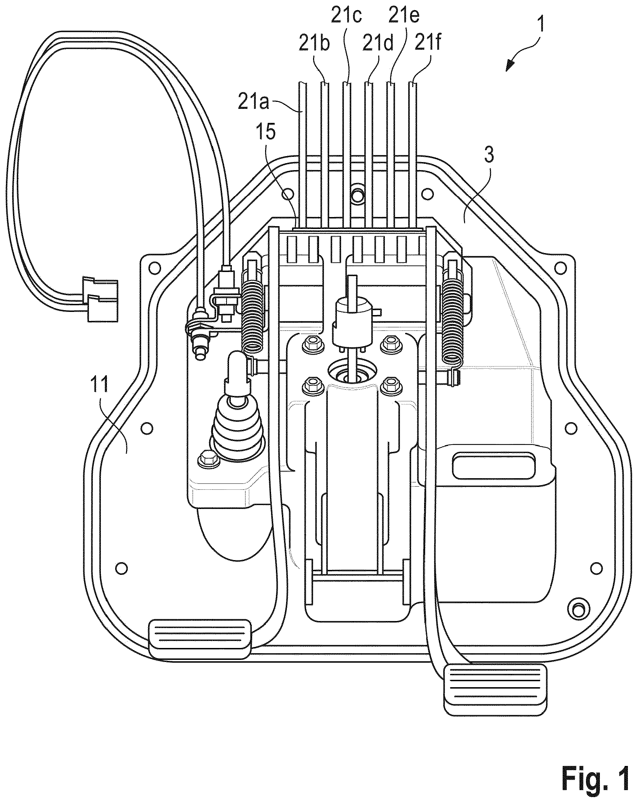

According to the embodiment illustrated in Fig. 1 the pedal unit 1 comprises a main body 3 adapted to be mounted, for instance by means of screws, to the firewall of a vehicle. The first side 11 of the main body 3 faces the driver's cabin after the pedal unit 1 has been mounted to the firewall. The main body 3 further comprises two pedals, which may for instance be braking, clutch or throttle pedals. A coupling 15 is detachably mounted to the main body 3. The coupling has six internal passageways (not shown), wherein each internal passageway is adapted to receive a fluid line 21a, 21b, 21c, 21d, 21e, 21f. The coupling 15 establishes fluid communication between each of the six fluid lines 21a, 21b, 21c, 21d, 21e, 21f and a corresponding passage (not shown) running from the first side 11 of the main body 3 to the second side (not shown) of the main body 3.

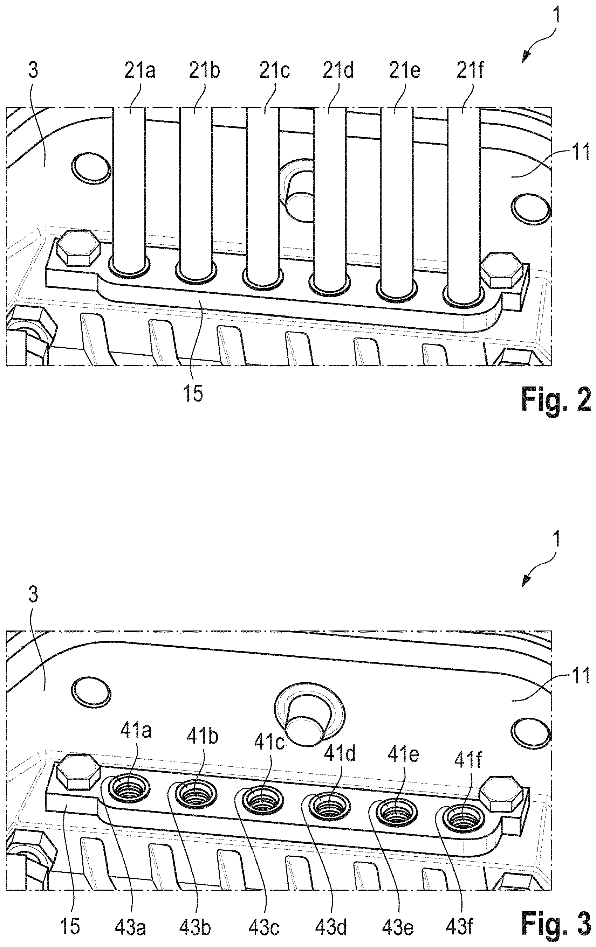

As illustrated in Fig. 2 the coupling 15 of the pedal unit 1 is formed as an elongate plate and is mounted by means of two screws to the main body 3. The two through-holes for screwing the coupling 15 to the main body 3 are arranged in an asymmetric manner, such that an incorrect alignment of the coupling 15 relative to the main body 3 is prevented. The six fluid lines 21a, 21b, 21c, 21d, 21e, 21f are in fluid communication with respective internal passageways (not shown) of the coupling 15.

Fig. 3 shows the coupling 15 mounted to the main body 3, without fluid lines being connected to it. A first O-ring 41a, 41b, 41c, 41d, 41e, 41f and a bushing 43a, 43b, 43c, 43d, 43e, 43f bearing a second O-ring are disposed within each internal passageway of the coupling 15. Both O-rings 41a, 41b, 41c, 41d, 41e, 41f, and bushings 43a, 43b, 43c, 43d, 43e, 43f within an internal passageway are adapted to allow fluid communication between a fluid line and the internal passageway.

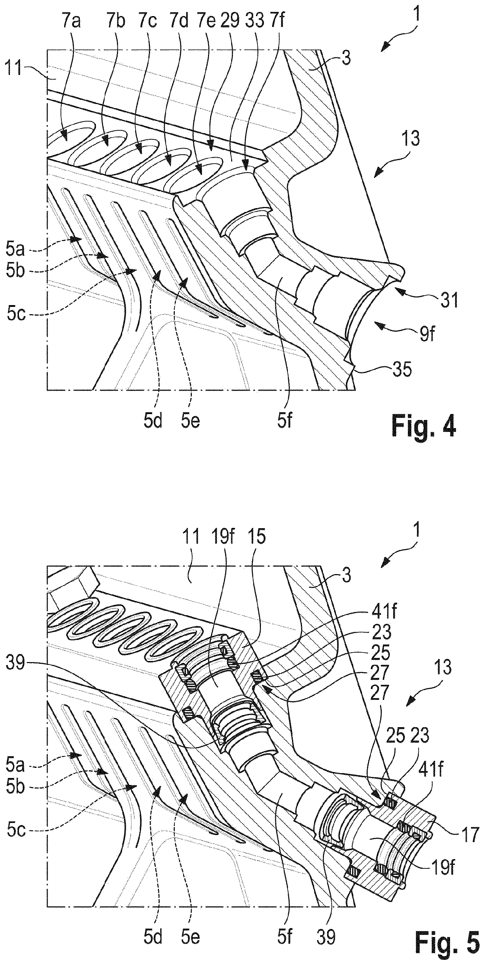

Fig. 4 shows a cross-sectional view of a main body 3 of a pedal unit 1. The passages 5c, 5d, 5e, 5f (5a, 5b not shown) extend from a first side 11 of the main body 3 to a second side 13 of the main body 3. Each passageway 5a, 5b, 5c, 5d, 5e, 5f allows for fluid communication between an inlet port 7d, 7e, 7f (7a, 7b, 7c not shown) on the first side 11 of the main body 3 and in outlet port 9f (9a, 9b, 9c, 9d, 9e not shown) on the second side 13 of the main body 3. The main body 3 further comprises a recess 29 around its inlet ports 7a, 7b, 7c, 7d, 7e, 7f and a recess 31 around its outlet ports 9a, 9b, 9c, 9d, 9e, 9f. The recesses 29, 31 are adapted to the outer shape of a coupling (not shown) in order to define a seat for the coupling such that a relative movement between the coupling and the main body 3 is avoided. The recess 29 disposed on the first side 11 of the main body 3 forms a planar surface 33 around the inlet ports 7a, 7b, 7c, 7d, 7e, 7f. The recess 31 disposed on the second side 13 of the main body 3 also forms a planar surface 35 around the outlet ports 9a, 9b, 9c, 9d, 9e, 9f.

Fig. 5 illustrates a main body 3 having a first coupling 15 mounted to its first side 11 and a second coupling 17 mounted to its second side 13. Both couplings 15, 17 comprise six internal passageways 19f (19a, 19b, 19c, 19d, 19e not shown), each of which is adapted to receive a fluid line (not shown) in order to establish fluid communication between the first side 11 and the second side 13 of the main body 3. Each internal passageway 19a, 19b, 19c, 19d, 19e, 19f of the first coupling 15 is connected to a respective internal passageway 19a, 19b, 19c, 19d, 19e, 19f of the second coupling 17 via corresponding passages 5a, 5b, 5c, 5d, 5e, 5f. The first coupling 15 comprises a planar surface 25, which is in contact with the planar surface around the inlet ports of the main body 3. The second coupling also comprises a planar surface 25, which is in contact with the planar surface 35 around the outlet ports of the main body 3. Both couplings 15, 17 have circularly-shaped grooves 27. A circularly-shaped gasket 23 is disposed within each circularly-shaped groove 27. An O-ring 41f (41a, 41b, 41c, 41d, 41e not shown), a bushing bearing a second O-ring and a clamping ring 39 are disposed within each internal passageway 19a, 19b, 19c, 19d, 19e, 19f of both couplings 15, 17.

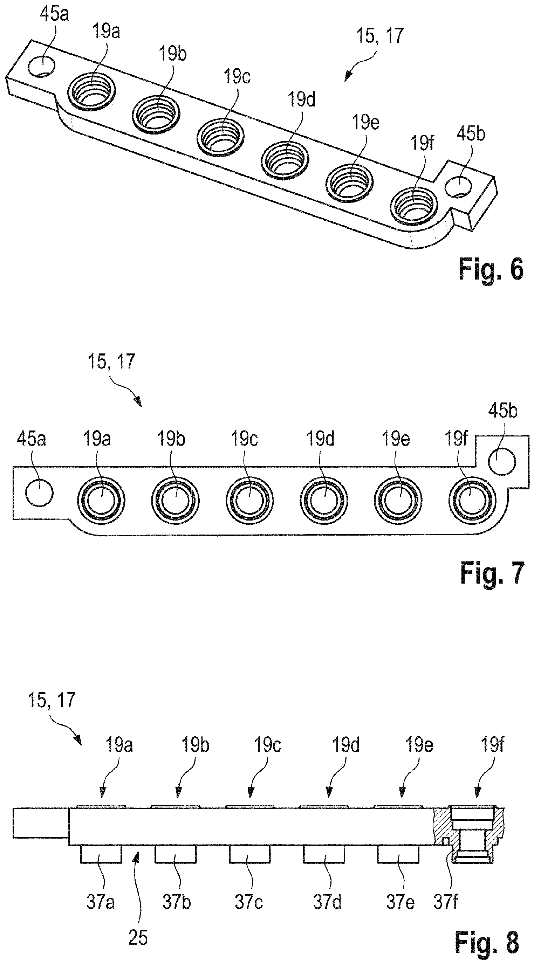

Fig. 6 illustrates a perspective view of a coupling 15, 17 having an asymmetric outer shape and two through-holes for screwing the coupling 15, 17 to the main body (not shown) on both ends, wherein the coupling 15, 17 is formed as an elongate plate. The internal passageways 19a, 19b, 19c, 19d, 19e, 19f are disposed along a line and are spaced from each other, preferably equidistantly.

Fig. 7 is a top view of a coupling 15, 17 and illustrates the internal passageways 19a, 19b, 19c, 19d, 19e, 19f as cylindrically-shaped and having sections featuring different diameters.

Fig. 8 is a side view of a coupling 15, 17 showing a part of the coupling in a cross-sectional view. Fig. 8 illustrates sections 37a, 37b, 37c, 37d, 37e, 37f of the coupling 15, 17, which are adapted to extend into corresponding passages of the main body (not shown) in the mounted condition of the coupling 15, 17.

### List of Reference Signs:

- 1: pedal unit
- 3: main body
- 5a, 5b, 5c, 5d, 5e, 5f: passages
- 7a, 7b, 7c, 7d, 7e, 7f: inlet ports
- 9a, 9b, 9c, 9d, 9e, 9f: outlet ports
- 11: first side
- 13: second side
- 15: first coupling
- 17: second coupling
- 19a, 19b, 19c, 19d, 19e, 19f: internal passageways
- 21a, 21b, 21c, 21d, 21e, 21f: fluid lines
- 23: gasket
- 25: planar surface
- 27: groove
- 29: recess around inlet ports
- 31: recess around outlet ports
- 33: planar surface around inlet ports
- 35: planar surface around outlet ports
- 37a, 37b, 37c, 37d, 37e, 37f: sections of coupling extending into corresponding passages
- 39: clamping ring
- 41a, 41b, 41c, 41d, 41e, 41f: O-ring
- 43a, 43b, 43c, 43d, 43e, 43f: bushing
- 45a, 45b: through-holes

## Claims

1. Pedal unit (1) for use in a vehicle, in particular for use in a truck, comprising:
a main body (3) being adapted to be mounted to a firewall of the vehicle that separates a driver's cabin from the engine compartment of the vehicle, said main body (3) comprising a plurality of passages (5a, 5b, 5c, 5d, 5e, 5f), each passage (5a, 5b, 5c, 5d, 5e, 5f) allowing for fluid communication between an inlet port (7a, 7b, 7c, 7d, 7e, 7f) on a first side (11) of said main body (3) configured to face the driver's cabin and an outlet port (9a, 9b, 9c, 9d, 9e, 9f) on a second side (13) of said main body (3) configured to face the engine compartment, and
a first coupling (15) being detachably mounted to said main body (3),
**characterized in that** said first coupling (15) has a plurality of internal passageways (19a, 19b, 19c, 19d, 19e, 19f), each internal passageway (19a, 19b, 19c, 19d, 19e, 19f) being in fluid communication with a respective inlet port (7a, 7b, 7c, 7d, 7e, 7f) or outlet port (9a, 9b, 9c, 9d, 9e, 9f) of said main body (3) and adapted to receive a fluid line (21a, 21b, 21c, 21d, 21e, 21f), and wherein the main body (3) comprises at least one of a braking, clutch or throttle pedal.

2. Pedal unit (1) according to claim 1,
**characterized by** a gasket (23) establishing a sealed connection between said internal passageways (19a, 19b, 19c, 19d, 19e, 19f) of said coupling (15) and said inlet ports (7a, 7b, 7c, 7d, 7e, 7f) or said outlet ports (9a, 9b, 9c, 9d, 9e, 9f).

3. Pedal unit (1) according to claim 1,
**characterized by** a plurality of gaskets (23), each gasket (23) establishing a sealed connection between an internal passageway (19a, 19b, 19c, 19d, 19e, 19f) and a respective inlet port (7a, 7b, 7c, 7d, 7e, 7f) or outlet port (9a, 9b, 9c, 9d, 9e, 9f).

4. Pedal unit (1) according to claim 2 or 3,
**characterized in that** each gasket (23) is adapted to withstand operating pressures up to 15 bar without allowing for leakage.

5. Pedal unit (1) according to claim 3 or 4,
**characterized in that** said coupling (15) has a, preferably planar, surface (25) with a plurality of grooves (27), each groove being adapted to receive at least one of said gaskets (23).

6. Pedal unit (1) according to claim 5,
**characterized in that** said main body (3) has a recess (29) around said inlet ports (7a, 7b, 7c, 7d, 7e, 7f) and/or a recess (31) around said outlet ports (9a, 9b, 9c, 9d, 9e, 9f), each recess (29, 31) being adapted to receive said coupling (15) and forming a corresponding, preferably planar, surface (33) interacting with said gaskets (23).

7. Pedal unit (1) according to one of the preceding claims,
**characterized in that** sections (37a, 37b, 37c, 37d, 37e, 37f) of said coupling (15) extend into corresponding passages (5a, 5b, 5c, 5d, 5e, 5f) of said main body (3).

8. Pedal unit (1) according to one of the preceding claims,
**characterized in that** a clamping ring (39) is disposed within each internal passageway (19a, 19b, 19c, 19d, 19e, 19f) of said coupling (15).

9. Pedal unit (1) according to one of the preceding claims,
**characterized in that** each internal passageway (19a, 19b, 19c, 19d, 19e, 19f) is adapted to receive at least one O-ring (41a, 41b, 41c, 41d, 41e, 41 f).

10. Pedal unit (1) according to one of the preceding claims,
**characterized in that** each internal passageway (19a, 19b, 19c, 19d, 19e, 19f) is adapted to receive at least one bushing (43a, 43b, 43c, 43d, 43e, 43f).

11. Pedal unit (1) according to one of the preceding claims,
**characterized in that** said coupling (15) is formed as an elongate plate and adapted to receive mounting means on both ends of said elongate plate and/or **in that** said internal passageways (19a, 19b, 19c, 19d, 19e, 19f) being disposed along a line and spaced from each other, preferably equidistantly.

12. Pedal unit (1) according to one of the preceding claims,
**characterized in that** said coupling (15) has at least two through-holes (45a, 45b) for screwing said coupling (15) to said main body (3), said through-holes (45a, 45b) being arranged in an asymmetric manner.

13. Pedal unit (1) according to one of the preceding claims,
**characterized in that** said main body (3) comprises at least six passages (5a, 5b, 5c, 5d, 5e, 5f) and said coupling (15) comprises at least six internal passageways (19a, 19b, 19c, 19d, 19e, 19f).

14. Pedal unit (1) according to one of the preceding claims,
**characterized in that** each internal passageway (19a, 19b, 19c, 19d, 19e, 19f) of said first coupling (15) is in fluid communication with a respective inlet port (7a, 7b, 7c, 7d, 7e, 7f) and wherein a second coupling (17) is detachably mounted to said main body (3) and has a plurality of internal passageways (19a, 19b, 19c, 19d, 19e, 19f), each internal passageway (19a, 19b, 19c, 19d, 19e, 19f) of said second coupling (17) being in fluid communication with a respective outlet port (9a, 9b, 9c, 9d, 9e, 9f) of said main body (3) and adapted to receive a fluid line (21a, 21b, 21c, 21d, 21e, 21f), said second coupling (17) preferably being formed and mounted to said main body (3) as the first coupling (15).

## Patentansprüche

1. Pedaleinheit (1) zur Verwendung in einem Fahrzeug, insbesondere zur Verwendung in einem Lkw, die Folgendes umfasst:
einen Hauptkörper (3), der angepasst ist, an ein Brandschott, das ein Fahrerhaus vom Motorraum des Fahrzeugs trennt, montiert zu werden, wobei der Hauptkörper (3) eine Vielzahl von Durchführungen (5a, 5b, 5c, 5d, 5e, 5f) umfasst, wobei jede Durchführung (5a, 5b, 5c, 5d, 5e, 5f) zwischen einem Einlassanschluss (7a, 7b, 7c, 7d, 7e, 7f) auf einer ersten Seite (11) des Hauptkörpers (3), die dazu ausgelegt ist, dem Fahrerhaus zugewandt zu sein, und einem Auslassanschluss (9a, 9b, 9c, 9d, 9e, 9f) auf einer zweiten Seite (13) des Hauptkörpers (3), die dazu ausgelegt ist, dem Motorraum zugewandt zu sein, eine Fluidkommunikation erlaubt, und
eine erste Kopplung (15), die lösbar am Hauptkörper (3) montiert ist,
**dadurch gekennzeichnet, dass** sie erste Kopplung (15) eine Vielzahl von inneren Durchleitungen (19a, 19b, 19c, 19d, 19e, 19f) aufweist, wobei jede innere Durchleitung (19a, 19b, 19c, 19d, 19e, 19f) mit einem jeweiligen Einlassanschluss (7a, 7b, 7c, 7d, 7e, 7f) oder Auslassanschluss (9a, 9b, 9c, 9d, 9e, 9f) des Hauptkörpers (3) in Fluidkommunikation steht und angepasst ist, eine Fluidleitung (21a, 21b, 21c, 21d, 21e, 21f) aufzunehmen, und wobei der Hauptkörper (3) mindestens eines von einem Brems-, einem Kupplungs- oder einem Gaspedal umfasst.

2. Pedaleinheit (1) nach Anspruch 1,
**gekennzeichnet durch** eine Dichtung (23), die zwischen den inneren Durchleitungen (19a, 19b, 19c, 19d, 19e, 19f) der Kopplung (15) und den Einlassanschlüssen (7a, 7b, 7c, 7d, 7e, 7f) oder den Auslassanschlüssen (9a, 9b, 9c, 9d, 9e, 9f) eine abgedichtete Verbindung herstellt.

3. Pedaleinheit (1) nach Anspruch 1,
**gekennzeichnet durch** eine Vielzahl von Dichtungen (23), wobei jede Dichtung (23) zwischen einer inneren Durchleitung (19a, 19b, 19c, 19d, 19e, 19f) und einem jeweiligen Einlassanschluss (7a, 7b, 7c, 7d, 7e, 7f) oder Auslassanschluss (9a, 9b, 9c, 9d, 9e, 9f) eine abgedichtete Verbindung herstellt.

4. Pedaleinheit (1) nach Anspruch 2 oder 3,
**dadurch gekennzeichnet, dass** jede Dichtung (23) angepasst ist, Betriebsdrücken von bis zu 15 bar zu widerstehen, ohne eine Leckage zuzulassen.

5. Pedaleinheit (1) nach Anspruch 3 oder 4,
**dadurch gekennzeichnet, dass** die Kopplung (15) eine, vorzugsweise planare, Oberfläche (25) mit einer Vielzahl von Nuten (27) aufweist, wobei jede Nut angepasst ist, mindestens eine der Dichtungen (23) aufzunehmen.

6. Pedaleinheit (1) nach Anspruch 5,
**dadurch gekennzeichnet, dass** der Hauptkörper (3) eine Ausnehmung (29) um die Einlassanschlüsse (7a, 7b, 7c, 7d, 7e, 7f) und/oder eine Ausnehmung (31) um die Auslassanschlüsse (9a, 9b, 9c, 9d, 9e, 9f) aufweist, wobei jede Ausnehmung (29, 31) angepasst ist, die Kopplung (15) aufzunehmen und eine entsprechende, vorzugsweise planare, Oberfläche (33) zu bilden, die mit den Dichtungen (23) interagiert.

7. Pedaleinheit (1) nach einem der vorhergehenden Ansprüche,
**dadurch gekennzeichnet, dass** sich Bereiche (37a, 37b, 37c, 37d, 37e, 37f) der Kopplung (15) in entsprechende Durchführungen (5a, 5b, 5c, 5d, 5e, 5f) des Hauptkörpers (3) erstrecken.

8. Pedaleinheit (1) nach einem der vorhergehenden Ansprüche,
**dadurch gekennzeichnet, dass** in jeder Durchleitung (19a, 19b, 19c, 19d, 19e, 19f) der Kopplung (15) ein Klemmring (39) angeordnet ist.

9. Pedaleinheit (1) nach einem der vorhergehenden Ansprüche,
**dadurch gekennzeichnet, dass** jede innere Durchleitung (19a, 19b, 19c, 19d, 19e, 19f) angepasst ist, mindestens einen O-Ring (41a, 41b, 41c, 41d, 41e, 41f) aufzunehmen.

10. Pedaleinheit (1) nach einem der vorhergehenden Ansprüche,
**dadurch gekennzeichnet, dass** jede innere Durchleitung (19a, 19b, 19c, 19d, 19e, 19f) angepasst ist, mindestens eine Buchse (43a, 43b, 43c, 43d, 43e, 43f) aufzunehmen.

11. Pedaleinheit (1) nach einem der vorhergehenden Ansprüche,
**dadurch gekennzeichnet, dass** die Kopplung (15) als eine langgestreckte Platte gebildet und angepasst ist, an beiden Enden der langgestreckten Platte Montagemittel aufzunehmen, und/oder dadurch, dass die inneren Durchleitungen (19a, 19b, 19c, 19d, 19e, 19f) entlang einer Linie angeordnet und voneinander beabstandet sind, vorzugsweise äquidistant.

12. Pedaleinheit (1) nach einem der vorhergehenden Ansprüche,
**dadurch gekennzeichnet, dass** die Kopplung (15) mindestens zwei Durchgangslöcher (45a, 45b) zum Anschrauben der Kopplung (15) an den Hauptkörper (3) aufweist, wobei die Durchgangslöcher (45a, 45b) in einer asymmetrischen Weise vorgesehen sind.

13. Pedaleinheit (1) nach einem der vorhergehenden Ansprüche,
**dadurch gekennzeichnet, dass** der Hauptkörper (3) mindestens sechs Durchführungen (5a, 5b, 5c, 5d, 5e, 5f) umfasst und die Kopplung (15) mindestens sechs innere Durchleitungen (19a, 19b, 19c, 19d, 19e, 19f) umfasst.

14. Pedaleinheit (1) nach einem der vorhergehenden Ansprüche,
**dadurch gekennzeichnet, dass** jede innere Durchleitung (19a, 19b, 19c, 19d, 19e, 19f) der ersten Kopplung (15) mit einem jeweiligen Einlassanschluss (7a, 7b, 7c, 7d, 7e, 7f) in Fluidkommunikation steht, und wobei eine zweite Kopplung (17) lösbar am Hauptkörper (3) montiert ist und eine Vielzahl von inneren Durchleitungen (19a, 19b, 19c, 19d, 19e, 19f) aufweist, wobei jede innere Durchleitung (19a, 19b, 19c, 19d, 19e, 19f) der zweiten Kopplung (17) mit einem jeweiligen Auslassanschluss (9a, 9b, 9c, 9d, 9e, 9f) des Hauptkörpers (3) in Fluidkommunikation steht und angepasst ist, eine Fluidleitung (21a, 21b, 21c, 21d, 21e, 21f) aufzunehmen, wobei die zweite Kopplung (17) vorzugsweise am Hauptkörper (3) gebildet und montiert ist wie die erste Kopplung (15).

## Revendications

1. Unité de pédale (1) destinée à être utilisée sur un véhicule, en particulier destinée à être utilisée sur un camion, comprenant :
un corps principal (3) qui est adapté pour être monté sur une cloison coupe-feu du véhicule qui sépare la cabine du conducteur du compartiment de moteur du véhicule, ledit corps principal (3) comprenant une pluralité de passages (5a, 5b, 5c, 5d, 5e, 5f), chaque passage (5a, 5b, 5c, 5d, 5e, 5f) permettant la communication de fluide entre un orifice d'entrée (7a, 7b, 7c, 7d, 7e, 7f) sur un premier côté (11) dudit corps principal (3) configuré pour faire face à la cabine du conducteur et un orifice de sortie (9a, 9b, 9c, 9d, 9e, 9f) sur un second côté (13) dudit corps principal (3) configuré pour faire face au compartiment de moteur ; et
un premier couplage (15) étant monté de manière détachable sur ledit corps principal (3),
**caractérisée en ce que** ledit premier couplage (15) a une pluralité de voies de passage internes (19a, 19b, 19c, 19d, 19e, 19f), chaque voie de passage interne (19a, 19b, 19c, 19d, 19e, 19f) étant en communication de fluide avec un orifice d'entrée (7a, 7b, 7c, 7d, 7e, 7f) respectif ou orifice de sortie (9a, 9b, 9c, 9d, 9e, 9f) dudit corps principal (3) et adaptée pour recevoir une conduite de fluide (21a, 21b, 21c, 21d, 21e, 21f), et dans laquelle le corps principal (3) comprend au moins l'un parmi une pédale de frein, d'embrayage ou d'accélérateur.

2. Unité de pédale (1) selon la revendication 1,
**caractérisée par** un joint (23) établissant un raccordement scellé entre lesdites voies de passage internes (19a, 19b, 19c, 19d, 19e, 19f) dudit couplage (15) et lesdits orifices d'entrée (7a, 7b, 7c, 7d, 7e, 7f) ou lesdits orifices de sortie (9a, 9b, 9c, 9d, 9e, 9f).

3. Unité de pédale (1) selon la revendication 1,
**caractérisée par** une pluralité de joints (23), chaque joint (23) établissant un raccordement scellé entre une voie de passage interne (19a, 19b, 19c, 19d, 19e, 19f) et un orifice d'entrée (7a, 7b, 7c, 7d, 7e, 7f) respectif ou un orifice de sortie (9a, 9b, 9c, 9d, 9e, 9f).

4. Unité de pédale (1) selon la revendication 2 ou 3,
**caractérisée en ce que** chaque joint (23) est adapté pour résister à des pressions de fonctionnement allant jusqu'à 15 bars sans permettre de fuites.

5. Unité de pédale (1) selon la revendication 3 ou 4,
**caractérisée en ce que** ledit couplage (15) a une surface (25) de préférence planaire avec une pluralité de rainures (27), chaque rainure étant adaptée pour recevoir au moins l'un desdits joints (23).

6. Unité de pédale (1) selon la revendication 5,
**caractérisée en ce que** ledit corps principal (3) a un évidement (29) autour desdits orifices d'entrée (7a, 7b, 7c, 7d, 7e, 7f) et/ou un évidement (31) autour desdits orifices de sortie (9a, 9b, 9c, 9d, 9e, 9f), chaque évidement (29, 31) étant adapté pour recevoir ledit couplage (15) et formant une surface (33) de préférence planaire correspondante interagissant avec lesdits joints (23).

7. Unité de pédale (1) selon l'une des revendications précédentes,
**caractérisée en ce que** des sections (37a, 37b, 37c, 37d, 37e, 37f) dudit couplage (15) s'étendent dans des passages (5a, 5b, 5c, 5d, 5e, 5f) correspondants dudit corps principal (3).

8. Unité de pédale (1) selon l'une des revendications précédentes,
**caractérisée en ce qu'**une bague de serrage (39) est disposée à l'intérieur de chaque voie de passage interne (19a, 19b, 19c, 19d, 19e, 19f) dudit couplage (15).

9. Unité de pédale (1) selon l'une des revendications précédentes,
**caractérisée en ce que** chaque voie de passage interne (19a, 19b, 19c, 19d, 19e, 19f) est adaptée pour recevoir au moins un joint torique (41a, 41b, 41c, 41d, 41e, 41f).

10. Unité de pédale (1) selon l'une des revendications précédentes,
**caractérisée en ce que** chaque voie de passage interne (19a, 19b, 19c, 19d, 19e, 19f) est adaptée pour recevoir au moins une douille (43a, 43b, 43c, 43d, 43e, 43f).

11. Unité de pédale (1) selon l'une des revendications précédentes,
**caractérisée en ce que** ledit couplage (15) est formé comme une plaque allongée et adapté pour recevoir des moyens de montage sur les deux extrémités de ladite plaque allongée et/ou **en ce que** lesdites voies de passage internes (19a, 19b, 19c, 19d, 19e, 19f) sont disposées le long d'une ligne et espacées les unes des autres, de préférence à équidistance.

12. Unité de pédale (1) selon l'une des revendications précédentes,
**caractérisée en ce que** ledit couplage (15) a au moins deux trous débouchants (45a, 45b) pour visser ledit couplage (15) audit corps principal (3), lesdits trous débouchants (45a, 45b) étant agencés d'une manière symétrique.

13. Unité de pédale (1) selon l'une des revendications précédentes,
**caractérisée en ce que** ledit corps principal (3) comprend au moins six passages (5a, 5b, 5c, 5d, 5e, 5f) et ledit couplage (15) comprend au moins six voies de passage internes (19a, 19b, 19c, 19d, 19e, 19f).

14. Unité de pédale (1) selon l'une des revendications précédentes,
**caractérisée en ce que** chaque voie de passage interne (19a, 19b, 19c, 19d, 19e, 19f) dudit premier couplage (15) est en communication de fluide avec un orifice d'entrée (7a, 7b, 7c, 7d, 7e, 7f) respectif et dans laquelle un second couplage (17) est monté de manière détachable sur ledit corps principal (3) et a une pluralité de voies de passage internes (19a, 19b, 19c, 19d, 19e, 19f), chaque voie de passage interne (19a, 19b, 19c, 19d, 19e, 19f) dudit second couplage (17) étant en communication de fluide avec un orifice de sortie (9a, 9b, 9c, 9d, 9e, 9f) respectif dudit corps principal (3) et adaptée pour recevoir une conduite de fluide (21a, 21b, 21c, 21d, 21e, 21f), ledit second couplage (17) étant de préférence formé et monté sur ledit corps principal (3) comme le premier couplage (15).
